Europäisches Patentamt

European Patent Office

Office européen des brevets

(11) Publication number: **0 171 829 B1**

# EUROPEAN PATENT SPECIFICATION

(45) Date of publication of patent specification: **07.10.92**  (51) Int. Cl.5: **H04N  9/75**

(21) Application number: **85201051.1**

(22) Date of filing: **02.07.85**

(54) **Improvements relating to video editing systems.**

(30) Priority: **16.08.84 GB 8420890**

(43) Date of publication of application:
**19.02.86 Bulletin  86/08**

(45) Publication of the grant of the patent:
**07.10.92 Bulletin  92/41**

(84) Designated Contracting States:
**DE FR GB**

(56) References cited:
**GB-A- 2 086 180**

**PATENT ABSTRACTS OF JAPAN, vol. 8, no. 103 (E-244)[1540], 15th May 1984; & JP-A-59 19 490 (SONY K.K.) 31-01-1984**

(73) Proprietor: **OUANTEL LIMITED**
**Pear Tree Lane**
**Newbury Berkshire RG13 2LT(GB)**

(72) Inventor: **Cawley, Robin Alexander**
**5 Wellington Cottages**
**Ball Hill Berkshire(GB)**
Inventor: **Pratt, Roderick Jermyn**
**Bothampstead House Hampstead Norreys**
**Newbury Berkshire(GB)**

(74) Representative: **Milhench, Howard Leslie et al**
**R.G.C. Jenkins & Co. 26 Caxton Street**
**London SW1H 0RJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to video editing systems, and especially to such systems which utilise so called chroma keying for combining video signals representing different pictures to produce a composite picture. These systems are frequently used for adding background scenery to a picture of actors, or for introducing illustrations behind a newsreader or lecturer.

Such systems comprise at least two input channels for video signals representing two different pictures, an output channel and switch means for selectively switching the video signals from one or the other of the input channels to the output channel. It is usually arranged that the signals in one channel represent the subjects which are to appear in the foreground in the composite picture set against a uniform background say of saturated blue at a uniform luminance. The switch means is responsive to these signals in such a way that when the signals representing foreground subjects are present the switch connects the respective input channel to the output channel, but when signals representing the saturated blue are present, the switch connects the input channel carrying the background illustration with the output channel. The signals representing the saturated blue of uniform luminance are called chroma key signals.

Indeed GB-A-2,086,180 discloses a video editing system in which at least two input video signals representing respective video images are selectively combined to produce an output signal representing a composite video image, the system comprising a video signal switching means for switching between the said video signals to produce said output signal in dependence on a predetermined characteristic of one of the input video signals.

One of the problems with this type of system is that the chroma key signal, though intended to be of uniform chrominance and luminance, is liable to exhibit unwanted variation and so the keying of the scene may become erratic. The variations in the chroma key signal can be caused by a combination of factors such as uneven lighting within the studio and also because of noise. Current systems try to overcome this problem by viewing the video sequence and manually varying the threshold levels at which the switching circuit operates until the best result is obtained. This method is obviously time consuming and does not always give satisfactory results.

The aim of the present invention is to produce a chroma keying or other similar editing system in which the switching is less susceptible to error due to unwanted variation in the keying signals.

According to one aspect of the present invention there is provided a video editing system in which at least two input video signals representing respective video images are selectively combined to produce an output signal representing a composite video image, the system comprising a video signal switching means for switching between the said video signals to produce said output signal in dependence on predetermined colour values of a first one of the input video signals,

characterised in that the system further comprises operator controlled means for designating a plurality of pixels within an area of the image represented by said first video signal detecting means for detecting the colour values of said designated pixels and for deriving a keying range of colour values, the switching means being arranged to switch between said video signals when a pixel in said first video signal has colour values in said keying range.

The system may further comprise frame freezing means for freezing a frame of said first one of the video signals for display; and said operator controlled means may comprise graphics signal means for creating a graphics signal for the designating of said plurality of pixels; and address generating means for generating address signals for use in applying said designated plurality of pixels to said detecting means and may further include a touch tablet and stylus means. The colour may be represented by three colour components the signals detected by representing say a range of luminance values and a range of two colour difference values. The three dimensions may alternatively be values of R, G, B or other colour components. The switching means may be operative to perform the selective switching in response to the presence of the signals representing all three colour components within the respective ranges of the colour components.

According to another aspect of the invention there is provided a method of video editing comprising the steps of:

providing at least two input video signals representing respective video images; and selectively combining the video signals to produce a composite video image by switching between the video signals in dependence on a predetermined characteristic of one of the input video signals; the method being characterised by the steps of:

designating a plurality of pixels within an area of the image represented by said first video signal; detecting the colour values of said designated pixels and deriving a keying range of colour values; and switching between the video signals when a pixel in said first video signal has colour values in said keying range.

The above and further features of the invention are set forth with particularity in the appended claims and together with advantages thereof will become clearer from consideration of an exemplary embodiment of the invention given with reference to the accompanying drawings.

In the drawings:

Figures 1a to 1c shows one example of the input and output video signals for which this invention can be used; and

Figure 2 shows a block diagram of an exemplary system embodying the invention.

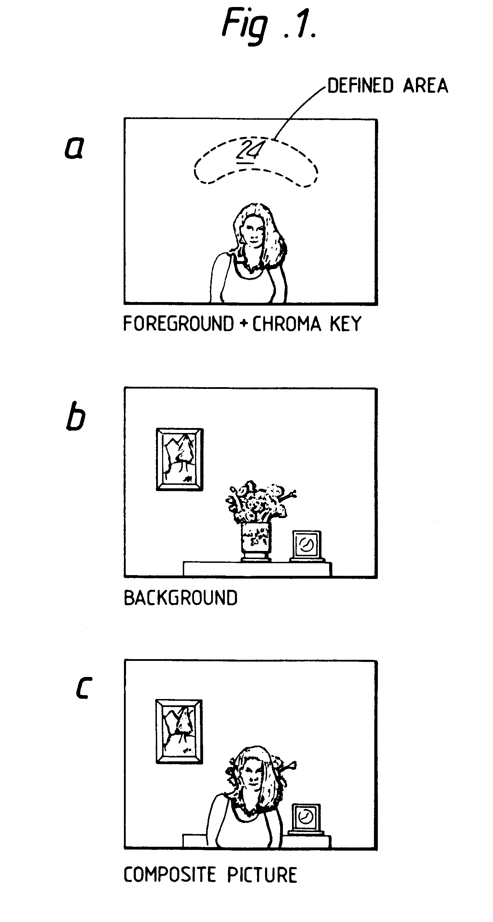

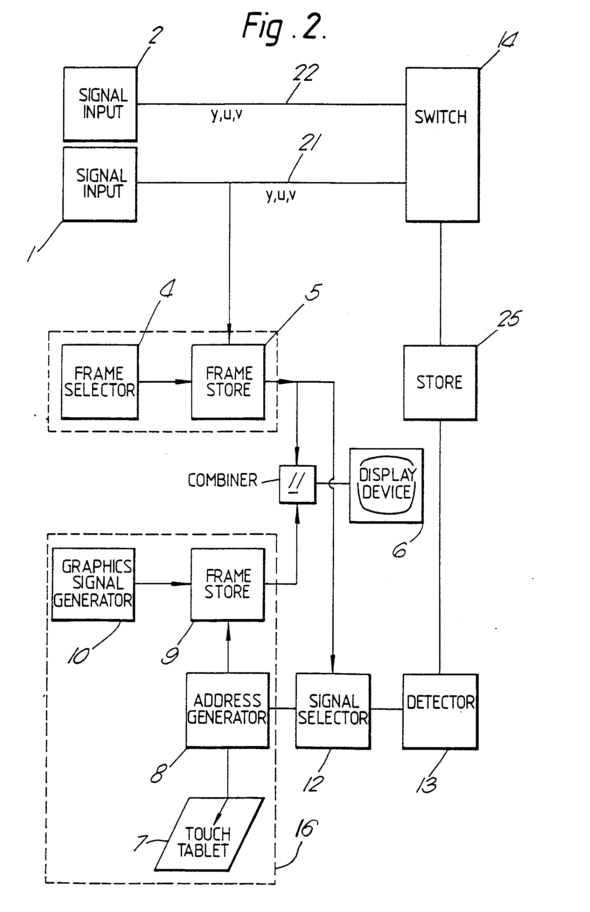

Referring now to the drawings, the scene shown in Fig. 1a and 1b represent an example of the type of situation for which the invention is useful. Fig. 1a shows a subject, which is to appear in the foreground of the composite picture, behind which is the chroma key forming a background of uniform colour, say saturated blue. Fig. 1b shows the background illustration which in the composite picture Fig. 1c can be seen as replacing the areas of chroma key. As will become clearer from the description that follows, in the system shown in Figure 2, a frame of video signals from one input channel, in this case the ones representing the scene in Fig. 1a, is frozen and displayed. This enables the operator to view the picture and decide which area within the chroma key is to be used to define the range of the predetermined characteristic to be used in a switching means. Once this area has been analysed and the range defined the switching means operates to combine the two input channels wherever signals representing components falling within the detected range are present.

An exemplary system embodying the invention is shown in Figure 2 of the accompanying drawings. In Figure 2, references 1 and 2 represent two sources of colour video signals in television format and it will be assumed that the source 1 provides signals representing the subjects to be seen in the foreground of the composite picture, while source 2 provides signals representing the background for said subjects. Thus source 1 may be assumed to provide signals representing a picture such as shown in Fig. 1a while source 2 likewise provides signals representing a picture such as shown in Fig. 1b. The signals from each source are arranged to be in digital form, each pixel comprising say eight binary bits, and each signal comprising three components at base band. The components are denoted as Y, U, V namely luminance and two colour difference signals; the colour difference signals are for example R-Y and B-Y or some other combination of the primary colour signals. The signals from the two sources 1 and 2 are fed via two channels 21 and 22 to a switch 14, each channel in this case comprising three parallel paths each eight bits wide for carrying respectively the three components Y, U, V. All the video signal channels represented in the drawings by a single line are of this form.

Channel 21 branches to a frame store 5 which forms part of a frame freezing arrangement, another part of this frame freezing arrangement being a frame selector 4.

In order to produce a still picture the frame selector 4 is operated and this causes a frame of video signals from channel 21, and thus from input 1, to be stored in the frame store 5. The contents of this frame store 5 are then fed repeatedly to a display device 6 so that a still picture from the sequence of video signals input at 1 can be seen thereon. The still picture will be of the form of Fig. 1a. The two inputs 1 and 2 and the frame freezing arrangement may be part of a video editing system such as that disclosed in UK Patent Application 8506652 published 9 October 1985 as GB-A-2,156,627 and claiming priority from UK Application 8,408,113.

Once a still picture has been obtained in this way an operator controlled means 16 can be used to mark an outline identifying an area, for example the area referenced 24 in figure 1a, on the picture as displayed on the display device 6. The area enclosed within the outline is the area which is to be used in a detector 13 to detect the range of the chroma key characteristic. The operator controlled means 16 consists of a touch tablet and stylus means 7, an address generator 8, a frame store 9 and a graphics signal source 10. The graphic signal generator 10 produces a signal which initially is stored in the frame store 9 in response to the address generator 8 and then is combined with the signals from frame store 5 in a combiner 11, the resultant signal being continuously displayed on the display device 6. The combiner 11 may be in the form of an inhibitor which inhibits signals from the frame store 5 at the addresses where there are video graphics signals in the frame store 9, thus producing a "black" point for each point identified by the touch tablet and stylus combination 7 as the stylus is moved to define the area to be used to detect the video key characteristic. In this way the graphics signal generator 10 produces a signal which represents the outline of the identified area. The addresses in frame store 9 at which the graphic signals are to be stored are generated by the address generator 8 in response to signals from the touch tablet and stylus means 7. The touch tablet 7 generates signals representative of the coordinates of a point where the stylus has touched the tablet and these signals are converted by the address generator 8 to address signals for the frame store 9. The area defining arrangement 16 could be part of a system such as described in UK Patent Application 8136539 published as GB-A-2,089,625.

When the area has been defined a signal selector 12 selects video signals from within this area from the frame store 5. The signal selector 12 selects the signals in response to the addresses generated in address generator 8 by blocking the signals from outside the defined area. The selected signals are then input into the detector 13 which detects the range of Y, U, V present in order to define a volume in colour space which is to be used as the chroma key. This information is stored in a store 25 to be used by the switch 14. The Y, U, V values of the video signals in channel 21 are analysed in the switch 14 and whenever all three values fall within the defined range the switch 14 operates to connect to channel 22. At other times the switch connects to channel 21. The analyser may be a simple window circuit to detect whether the incoming Y, U, V values are greater than the minimum Y, U, V values detected and less than the maximum detected values. Other criteria may however be used for operating the switch 14. The switch 14 outputs the signals from the selected input to display device 6.

## Claims

1. A video editing system in which at least two input video signals (1, 2) representing respective video images are selectively combined to produce an output signal representing a composite video image, the system comprising a video signal switching means (14) for switching between the said video signals (1, 2) to produce said output signal in dependence on predetermined colour values of a first one of the input video signals,

   characterised in that the system further comprises operator controlled means (16) for designating a plurality of pixels within an area of the image represented by said first video signal, detecting means (13) for detecting the colour values of said designated pixels and for deriving a keying range of colour values, the switching means (14) being arranged to switch between said video signals when a pixel in said first video signal has colour values in said keying range.

2. A system as claimed in Claim 1, characterised by frame freezing means (4, 5) for freezing a frame of said first one of the video signals for display; and in that said operator controlled means (16) comprises graphics signal means (10) for creating a graphics signal for the designating of said plurality of pixels; and address generating means (8) for generating address signals for use in applying said designated plurality of pixels to said detecting means (13).

3. A system as claimed in Claim 1 or 2, characterised in that said operator controlled means (16) comprises a touch tablet and stylus means (7).

4. A system as claimed in any preceding claim, wherein said colour is represented by three colour components (Y, U, V), characterised in that said switching means (14) is operative when signals representing the three colour components are within respective ranges for each component of the detected range of colour.

5. A system as claimed in any preceding claim, characterised in that the system further comprises a display means (6) for displaying video images.

6. A method of video editing comprising the steps of:
   providing at least two input video signals representing respective video images; and selectively combining the video signals to produce a composite video image by switching between the video signals in dependence on a predetermined characteristic of one of the input video signals; the method being characterised by the steps of:
   designating a plurality of pixels within an area of the image represented by said first video signal; detecting the colour values of said designated pixels and deriving a keying range of colour values; and switching between the video signals when a pixel in said first video signal has colour values in said keying range.

7. A method as claimed in claim 6, characterised by the steps of freezing a frame of said one of the video signals for display; and identifying pixels in the displayed image as the designated pixels.

## Patentansprüche

1. Videobearbeitungssystem, bei dem wenigstens zwei Videoeingangssignale (1, 2), die jeweils Videobilder repräsentieren, selektiv kombiniert werden, um ein Ausgangssignal zu erzeugen, das ein zusammengesetztes Videobild repräsentiert, umfassend eine Videosignalschalteinrichtung (14) für das Umschalten zwischen den Videosignalen (1, 2), um das Ausgangssignal in Abhängigkeit von vorbestimmten Farbwerten eines ersten der Videosignale zu erzeugen, **dadurch gekennzeichnet,** daß das System ferner eine von einem Bediener gesteuerte Einrichtung (16) zur Bestimmung einer Vielzahl von Pixeln innerhalb einer Fläche des durch das erste Videosignal repräsentierten Bildes, eine Detektoreinrichtung (13) zur Detektion der Farbwerte der bestimmten Pixel und zur Gewinnung eines Tastbereiches von Farbwerten umfaßt, wobei die Schalteinrichtung (14) dazu eingerichtet ist, zwischen den Videosignalen zu schalten, wenn ein Pixel in dem ersten Videosignal Farbwerte hat, die in dem Tastbereich liegen.

2. System nach Anspruch 1, dadurch gekennzeichnet, daß es eine Bildfesthalteeinrichtung (4, 5) zum Festhalten eines Bildes aus dem ersten der Videosignale für eine Anzeige umfaßt, und daß die von einem Bediener gesteuerte Einrichtung (16) eine Graphiksignaleinrichtung (10) zur Bildung eines Graphiksignals für die Bestimmung der Vielzahl von Pixeln und eine Adressengeneratoreinrichtung (8) zur Generierung von Adreßsignalen, die dazu herangezogen werden, die bestimmte Vielzahl von Pixeln auf die Detektoreinrichtung (13) anzuwenden, umfaßt.

3. System nach Anspruch 1 oder 2, dadurch gekennzeichnet, daß die von einem Bediener gesteuerte Einrichtung (16) eine Berührungstablett- und Markierstift-Einrichtung (7) umfaßt.

4. System nach wenigstens einem der vorhergehenden Ansprüche, wobei die Farbe durch drei Farbkomponenten (Y, U, V) repräsentiert ist, dadurch gekennzeichnet, daß die Schalteinrichtung (14) wirksam ist, wenn Signale, die die drei Farbkomponenten repräsentieren, innerhalb jeweiliger Bereiche für jede Komponente des detektierten Farbbereichs liegen.

5. System nach wenigstens einem der vorhergehenden Ansprüche, dadurch gekennzeichnet, daß das System ferner eine Anzeigeeinrichtung (6) für die Darstellung von Videobildern umfaßt.

6. Verfahren zur Videobearbeitung, bei dem man wenigstens zwei Videoeingangssignale, die jeweilige Videobilder repräsentieren, bereitstellt, und die Videosignale selektiv kombiniert, um ein zusammengesetztes Videobild zu erzeugen, indem man in Abhängigkeit einer vorbestimmten Charakteristik eines der Videoeingangssignale zwischen den Videosignalen umschaltet,
**dadurch gekennzeichnet,** daß man eine Vielzahl von Pixeln innerhalb einer Fläche des durch das erste Videosignal repräsentierten Bildes bestimmt, die Farbwerte der bestimmten Pixel detektiert und einen Tastbereich von Farbwerten herleitet, und zwischen den Videosignalen umschaltet, wenn ein Pixel in dem ersten Videosignal Farbwerte hat, die in dem Tastbereich liegen.

7. Verfahren nach Anspruch 6, dadurch gekennzeichnet, daß man ein Bild aus dem einen der Videosignale für eine Anzeige festhält und in dem angezeigten Bild Pixel als die bestimmten Pixel identifiziert.

## Revendications

1. Système d'édition vidéo dans lequel au moins 2 signaux vidéo d'entrées (1,2) représentant des images vidéo respectives sont combinées de manière sélective pour produire un signal de sortie représentant une image vidéo composite, le système comprenant un dispositif de commutation (14) de signal vidéo pour commuter lesdits deux signaux vidéo (1,2) pour produire ledit signal de sortie en fonction de valeurs de couleur prédéterminées par le premier des signaux vidéo d'entrée, caractérisé en ce que le système en outre comprend un dispositif de commande 16 par opérateur pour désigner une pluralité de pixels dans une zone de l'image visualisée par ledit premier signal vidéo, un dispositif de détection (13) pour détecter les valeurs de couleur desdits pixels désignés et pour extraire une plage de référence de valeurs de couleur, le dispositif de commutation (14) étant arrangé pour commuter lesdits signaux vidéo lorsqu'un pixel dudit premier signal vidéo a des valeurs de couleur contenues dans ladite plage de référence.

2. Système selon la revendication 1, caractérisé par un dispositif (4,5) d'arrêt sur image pour figer une image dudit premier signal vidéo afin de la visualiser; et en ce qu'un dispositif de commande (16) par opérateur comprend un dispositif (10) de signal graphique pour créer un signal graphique pour désigner ladite pluralité de pixels; et un dispositif (8) de génération d'adresses pour générer des signaux d'adresses correspondant à ladite pluralité de pixels désignée et qui sont utilisées par ledit dispositif de détection (13).

3. Système selon la revendication 1 ou 2, caractérisé en ce que ledit dispositif de commande (16) par opérateur comprend un dispositif (7) formé d'une tablette sensitive et d'un crayon optique.

4. Système selon toute revendication précédente, par lequel ladite couleur est représentée par trois composantes couleur (Y, U, V ), caractérisé en ce que ledit dispositif (14) de commutation est activé lorsque des signaux représentant les trois composantes couleur sont contenues dans les plages respectives pour chaque composante de la plage de couleur détectée.

5. Système selon toute revendication précédente, caractérisé en ce que le système comprend de plus un dispositif (6) de visualisation pour visualiser des images vidéo.

6. Méthode d'édition vidéo comprenant les étapes de:

fourniture d'au moins deux signaux vidéo d'entrée représentant des images vidéo respectives; et la combinaison sélective de signaux vidéo pour produire une image vidéo composite par commutation des signaux vidéo en fonction des caractéristiques prédéterminées de l'un des signaux vidéo d'entrée; la méthode étant caractérisée par les étapes de:

désignation d'une pluralité de pixels dans une zone de l'image visualisée par ledit signal vidéo; détection de valeurs de couleur desdits pixels désignés et extraction d'une plage de référence de valeurs de couleur; et commutation des signaux vidéo lorsqu'un pixel dudit premier signal vidéo a des valeurs de couleur contenues dans ladite plage de référence.

7. Méthode selon la revendication 6 caractérisée par les étapes d'arrêt sur image de l'un desdits signaux vidéo afin de la visualiser; et de définition de pixels dans l'image visualisée en tant que pixels désignés.

# Fig .1.

a

FOREGROUND + CHROMA KEY

b

BACKGROUND

c

COMPOSITE PICTURE

# Fig. 2.